# EUROPEAN PATENT APPLICATION

(11) **EP 4 822 879 A1**
(43) Date of publication of application: **14.10.2026**
(21) Application number: 25877917.2
(22) Date of filing: 02.10.2025
(51) Int. Cl.: H01M 50/538, H01M 50/533, H01M 50/249

(54) **BATTERY CELL, BATTERY PACK, AND VEHICLE INCLUDING SAME**

(30) Priority: 08.10.2024 KR 20240136667
(71) Applicant: LG Energy Solution, Ltd., Seoul 07335 (KR)
(72) Inventor: LEE, Ha-Na, Daejeon 34122 (KR)
(74) Representative: Goddar, Heinz J.
(86) International application number: PCT/KR2025/015788
(87) International publication number: WO 2026/079861

(57) **Abstract**

A battery cell according to the present disclosure includes: an electrode assembly configured by winding electrodes with a separator interposed between them around a winding axis; at least one weld tab formed by first welding at least some of a plurality of foil tabs formed in an uncoated portion of the electrode while being stacked in a direction different from the winding axis; and a current collector electrically connected to the electrode assembly and secondarily welded to the weld tab.

## Description

### TECHNICAL FIELD

The present disclosure relates to a battery cell, a battery pack, and a vehicle including the same and, more specifically, to a battery cell and battery pack having improved strength and safety, as well as improved productivity, and a vehicle including the same.

This application is based on and claims priority from Korean Patent Application No. 10-2024-0136667, filed on October 08, 2024, with the Korean Intellectual Property Office, the disclosure of which is incorporated herein in its entirety by reference.

### BACKGROUND ART

Recently, the demand for portable electronic products such as laptop PCs, video cameras, and mobile phones has rapidly increased, and the development of electric vehicles, energy storage batteries, robots, satellites, and other related technologies has accelerated. As a result, active research on high-performance secondary batteries, which can be repeatedly charged and discharged, is underway.

Currently commercialized secondary batteries include nickel-cadmium batteries, nickel-hydrogen batteries, nickel-zinc batteries, and lithium-ion secondary batteries. Among these, lithium-ion secondary batteries are in the spotlight for their advantages of flexible charging and discharging due to almost no memory effect, a very low self-discharge rate, and a high energy density, compared to nickel-based secondary batteries.

These lithium-ion secondary batteries generally use lithium-based oxides and carbon materials as positive and negative electrode active materials, respectively. In addition, the lithium-ion secondary batteries include an electrode assembly in which the positive and negative electrode plates coated with the positive and negative electrode active materials, respectively, are disposed with a separator therebetween, and an exterior case that stores the electrode assembly with an electrolyte in a sealing manner.

Meanwhile, lithium-ion secondary batteries may be classified, depending on the shape of a battery case, into pouch-type secondary batteries in which the electrode assembly is accommodated in a pouch of an aluminum laminate sheet and can-type secondary batteries in which the electrode assembly is accommodated in a metal can. In addition, can-type secondary batteries may be further classified into cylindrical batteries and prismatic batteries depending on the shape of the metal can. These lithium-ion secondary batteries are assembled into a dense structure by stacking or overlapping multiple battery cells, either individually or in cartridges, to provide high voltage and current, and these cells are then electrically connected to form a battery module or battery pack.

Conventional cylindrical secondary batteries are configured such that a plurality of notched or non-notched foil tabs are welded directly to a current collector. These conventional foil tabs are weak, making them prone to electrode bending and other problems when coupled to the current collector, thereby leading to reduced stability in conventional cylindrical secondary batteries.

In addition, conventional cylindrical secondary batteries require the vertical stacking of a plurality of foil tabs, necessitating the calculation of the number of overlapping foil tabs. Furthermore, conventional cylindrical secondary batteries requires additional time for vertical folding, and the folding process may also lead to poor folding of the foil tabs, which may reduce battery productivity.

In addition, in the conventional cylindrical secondary batteries, it is difficult to weld the plurality of foil tabs to the current collector at once, making it difficult to firmly bond the foil tabs to the current collector. Furthermore, in the conventional cylindrical secondary batteries, high-temperature welding heat may be directly transferred to the electrode assembly, potentially damaging the electrode assembly.

### DISCLOSURE

### Technical Problem

The present disclosure is designed to solve the problems of the related art, and therefore the present disclosure is directed to providing a battery cell and battery pack having improved strength and stability, as well as improved productivity, and a vehicle including the same with.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery cell including: an electrode assembly configured by winding electrodes with a separator interposed between them around a winding axis; at least one weld tab formed by first welding at least some of a plurality of foil tabs formed in an uncoated portion of the electrode while being stacked in a direction different from the winding axis; and a current collector electrically connected to the electrode assembly and secondarily welded to the weld tab.

The weld tab may be formed by first welding at least some of the plurality of foil tabs while being stacked in a direction perpendicular to the winding axis.

The foil tab may have a height that decreases in a direction away from the winding axis in at least some regions of the uncoated portion.

A plurality of weld tabs may be provided, and the plurality of weld tabs may be arranged in a circumferential direction.

A plurality of weld tabs may be provided, and the plurality of weld tabs may be arranged in a radial direction.

The current collector may have an inner groove formed on an inner surface of the current collector such that the weld tab is secured thereinto.

The weld tab may have a bent portion having a bent shape, and the bent portion may be secured into the inner groove.

The current collector may have a through-hole formed to allow the weld tab to pass therethrough.

The weld tab may have a bent portion having a bent shape, and the bent portion may be disposed outside the current collector.

The current collector may have an outer groove formed on an outer surface of the current collector such that the bent portion is secured thereinto.

In another aspect of the present disclosure, there is provided a battery pack including at least one battery cell according to the present disclosure.

In another aspect of the present disclosure, there is provided a vehicle including at least one battery pack according to the present disclosure.

### Advantageous Effects

According to the present disclosure, it is possible to provide a battery cell and battery pack having foil tabs with excellent strength, and a vehicle including the same.

In addition, according to one aspect of the present disclosure, it is possible to provide a battery cell and battery pack with improved stability, and a vehicle including the same.

In addition, according to one aspect of the present disclosure, it is possible to provide a battery cell and battery pack with improved productivity, and a vehicle including the same.

In addition, according to one aspect of the present disclosure, it is possible to provide a battery cell and battery pack that enable multiple foil tabs to be easily and firmly coupled to a current collector, and a vehicle including the same.

In addition, according to one aspect of the present disclosure, it is possible to provide a battery cell and battery pack capable of preventing damage to the electrode assembly, and a vehicle including the same.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a battery cell according to an embodiment of the present disclosure.
FIG. 2 is a side cross-sectional view illustrating the internal configuration of a battery cell according to an embodiment of the present disclosure.
FIG. 3 is a diagram illustrating a current collector according to an embodiment of the present disclosure.
FIG. 4 is a side view illustrating an electrode according to an embodiment of the present disclosure.
FIGS. 5 to 8 are plan views illustrating various examples of electrode assemblies according to an embodiment of the present disclosure.
FIG. 9 is a side cross-sectional view illustrating examples of electrode assemblies according to an embodiment of the present disclosure.
FIG. 10 is a diagram illustrating a current collector according to a modified example of an embodiment of the present disclosure.
FIG. 11 is a diagram illustrating a current collector according to another embodiment of the present disclosure.
FIG. 12 is a diagram illustrating a current collector according to a modified example of another embodiment of the present disclosure.
FIG. 13 is a diagram illustrating a battery pack according to an embodiment of the present disclosure.
FIG. 14 is a drawing illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

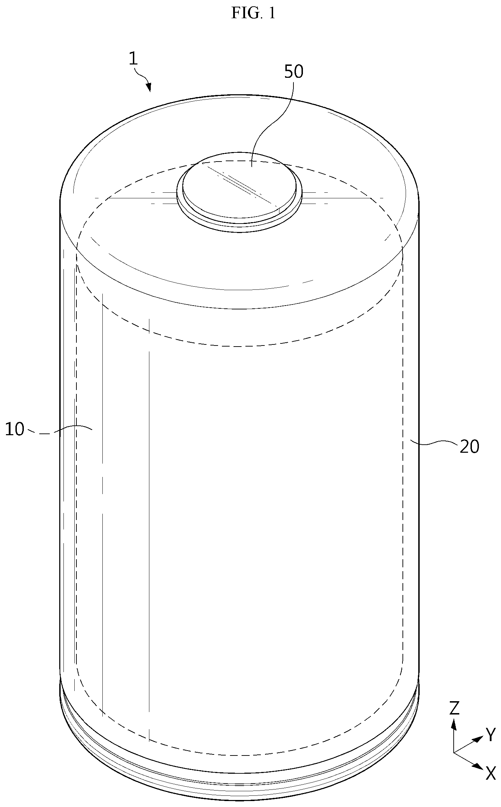

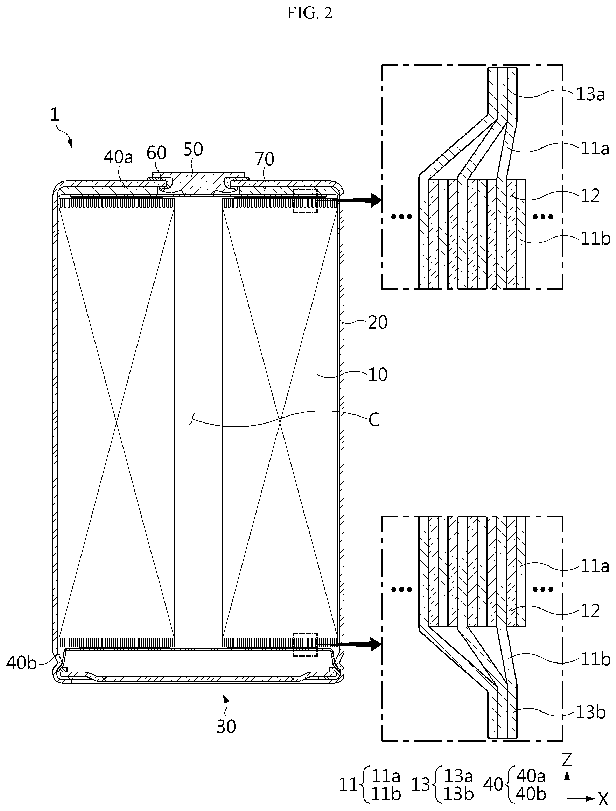

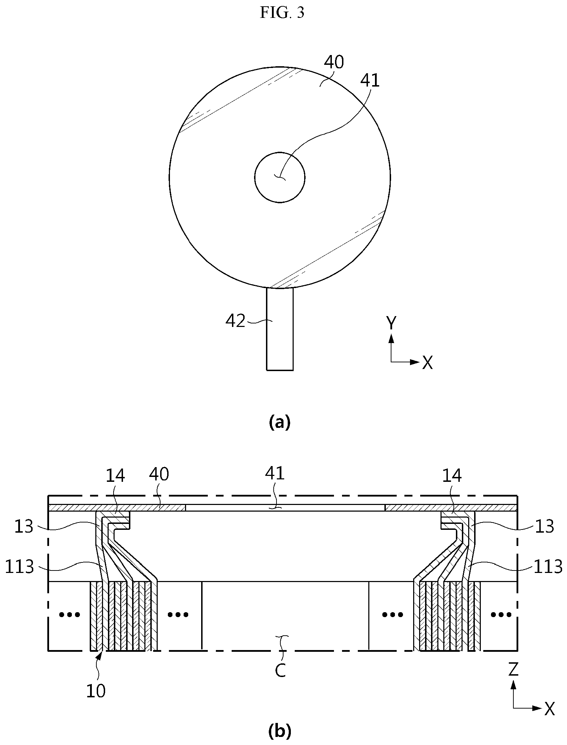

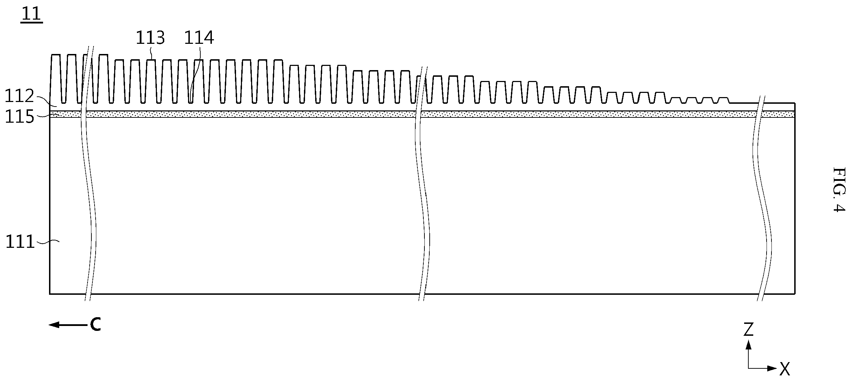

FIG. 1 is an overall perspective view of a battery cell according to an embodiment of the present disclosure, FIG. 2 is a side cross-sectional view illustrating the internal configuration of a battery cell according to an embodiment of the present disclosure, FIG. 3 is a diagram illustrating a current collector according to an embodiment of the present disclosure, and FIG. 4 is a side view illustrating an electrode according to an embodiment of the present disclosure.

Hereinafter, a battery cell 1 according to an embodiment of the present disclosure will be described in detail with reference to FIGS. 1 to 4. The battery cell 1 according to an embodiment of the present disclosure may include an electrode assembly 10, a weld tab 13, and a current collector 40.

The electrode assembly 10 may include an electrode 11 and a separator 12. The electrode 11 may include a first electrode 11a and a second electrode 11b. The separator 12 may be interposed between the electrodes 11. The separator 12 may be interposed between the first electrode 11a and the second electrode 11b. The first electrode 11a may have a first polarity, and the second electrode 11b may have a second polarity opposite the first polarity. For example, the first polarity may be a positive polarity, and the second polarity may be a negative polarity. The separator 12 may be an insulator.

The electrode assembly 10 may have a jelly-roll structure. That is, the electrode assembly 10 may be manufactured by winding, around a winding axis C, a laminate formed by laminating a sheet-shaped first electrode 11a and a sheet-shaped second electrode 11b with a separator 12 interposed between them at least once. Any jelly-roll structure known in the art may be applied without limitation to the present disclosure.

The electrode 11 may include a coated portion 111 and an uncoated portion 112. The coated portion 111 may be a portion where an active material layer is applied on at least one surface of the electrode 11. For example, a positive electrode active material may be applied onto the coated portion 111 of the first electrode 11a, and a negative electrode active material may be applied onto the coated portion 111 of the second electrode 11b.

The uncoated portion 112 may be a portion of the electrode 11 where no active material is applied. The electrode 11 may have a predetermined length and width, and the uncoated portion 112 may be formed on one long side of the electrode 11. For example, as illustrated in FIG. 4, the electrode 11 may have a predetermined length and width in the X and Z directions, respectively, and the uncoated portion 112 may be formed on the long side in the +Z direction. Unlike the configuration in FIG. 4, the uncoated portion 112 may also be formed on the long side in the -Z direction.

At least a portion of the uncoated portion 112 may be exposed outside the separator 12. The uncoated portion 112 may be used as an electrode tab.

The uncoated portion 112 may have a plurality of foil tabs 113. The foil tabs 113 may be exposed outside the separator 12. The plurality of foil tabs 113 may be arranged in a row from the winding axis C side (e.g., the -X-direction side in FIG. 4) toward the outer side (e.g., the +X-direction side in FIG. 4). The plurality of foil tabs 113 may be configured with at least one notched portion 114 formed by notching.

The weld tab 13 may be formed by first welding at least some of the plurality of foil tabs 113. Specifically, the weld tab 13 may be provided as a lump or bundle of foil tabs 113 that are first welded.

The weld tab 13 may include a first weld tab 13 and a second weld tab 13. The first weld tab 13 may be formed by first welding at least some of the foil tabs 113 of the first electrode 11a, and the second weld tab 13 may be formed by first welding at least some of the foil tabs 113 of the second electrode 11b.

One or more weld tabs 13 may be provided. One or more first weld tabs 13 and second weld tabs 13 may be provided.

For reference, in FIG. 2, the foil tabs 113 of the first electrode 11a and the first weld tab 13 are positioned on the +Z-direction side, and the foil tabs 113 of the second electrode 11b and the second weld tab 13 are positioned on the -Z-direction side, but the present disclosure is not limited thereto, and the foil tabs 113 of the first electrode 11a and the first weld tab 13 may be positioned on the -Z-direction side, and the foil tabs 113 of the second electrode 11b and the second weld tab 13 may be positioned on the +Z-direction side.

The weld tab 13 may be formed by performing a first welding while at least some of the plurality of foil tabs 113 are stacked in a direction different from the winding axis C. For example, as illustrated in FIG. 2, when the direction of the winding axis C is parallel to the Z-axis, the weld tab 13 may be formed by welding at least some of the plurality of foil tabs 113 to each other while being stacked in a direction other than the Z-axis.

The current collector 40 may be electrically connected to the electrode assembly 10. The current collector 40 may be secondarily welded to the weld tab 13. For example, the weld tab 13 may be secondarily welded to the inner surface of the current collector 40. The second welding may be understood as welding performed after the first welding. The second welding and the first welding may be different welding methods from each other.

The current collector 40 may include a first current collector 40a and a second current collector 40b. The first current collector 40a may be secondarily welded to the first weld tab 13 and may have a first polarity. The second current collector 40b may be secondarily welded to the second weld tab 13 and may have a second polarity.

For reference, although FIG. 2 illustrates the first current collector 40a positioned on the +Z-direction side and the second current collector 40b positioned on the -Z-direction side, the present disclosure is not limited thereto, and the first current collector 40a may be positioned on the -Z-direction side, and the second current collector 40b may be positioned on the +Z-direction side.

The battery cell 1 according to an embodiment of the present disclosure may have enhanced strength and safety, while improving productivity. Specifically, since the foil tabs 113 are first welded into a weld tab 13, the foil tabs 113 may have excellent strength, thereby minimizing bending of the electrode 11 that may occur when coupled to the current collector 40 and improving the quality of the electrode 11, and consequently, the safety of the battery cell 1 may be enhanced.

In addition, since the foil tabs 113 are welded while being stacked in a direction different from the winding axis C, there is no need to stack the foil tabs 113 in a vertical direction, thereby eliminating the need to calculate the number of foil tabs 113 that overlap vertically. In addition, since the process of bending the foil tabs 113 for vertical overlapping is omitted, the time required for bending may be reduced, and the defective bending of the foil tabs 113, which may occur during the bending process, may also be prevented, thereby improving the productivity of the battery cell 1.

In addition, in the battery cell 1 according to an embodiment of the present disclosure, since the weld tab 13 and the current collector 40 are coupled by a second welding, multiple foil tabs 113 may be easily and firmly coupled to the current collector 40 at once. Furthermore, high-temperature welding heat may not be directly transferred to the electrode assembly 10 during the welding process between the current collector 40 and the electrode assembly 10, thereby preventing damage to the electrode assembly 10.

The weld tab 13 may include a bent portion 14. The end of the weld tab 13 may be bent, and the bent end of the weld tab 13 may be the bent portion 14. The bent portion 14 may be in contact with the current collector 40 and then secondarily welded to the current collector 40.

The current collector 40 may include a hollow cavity 41. The hollow cavity 41 may be formed approximately at the center of the current collector 40. The hollow cavity 41 may be configured to allow an electrolyte or a welding rod to pass through it. The current collector 40 may include a tab 42. The tab 42 may protrude from the current collector 40. The tab 42 may be electrically connected to a terminal 50 or cell housing 20, which will be described later.

The weld tab 13 may be formed by first welding at least some of the plurality of foil tabs 113 while being stacked in a direction perpendicular to the winding axis C. For example, as illustrated in FIG. 3, when the winding axis C is formed parallel to the Z-axis, the foil tabs 113 may be stacked in the X direction and first welded, thereby forming the weld tab 13. When the winding axis C is formed parallel to the Z-axis, the foil tabs 113 may also be stacked in the Y direction, unlike as illustrated in FIG. 3, and first welded to form the weld tab 13.

In this case, the foil tabs 113 do not need to be stacked in the vertical direction along the Z-axis, thereby improving the productivity of the battery cell 1.

The foil tab 113 may have a height that decreases in the direction away from the winding axis C in at least some regions of the uncoated portion 112. In FIG. 4, the -X direction may be a direction toward the winding axis C, and the +X direction may be a direction away from the winding axis C toward the outer side. Referring to FIG. 4, the height (the height in the Z direction) of the foil tab 113 may decrease toward the +X direction. Unlike that illustrated in FIG. 4, the height of the foil tab 113 may decrease toward the +X direction only in some X-direction regions of the electrode 11.

When the foil tabs 113 are configured as described above, the foil tabs 113 may be easily stacked, allowing the weld tab 13 to be easily formed. In addition, the foil tabs 113 may be stacked more precisely, thereby improving the strength of the weld tab 13.

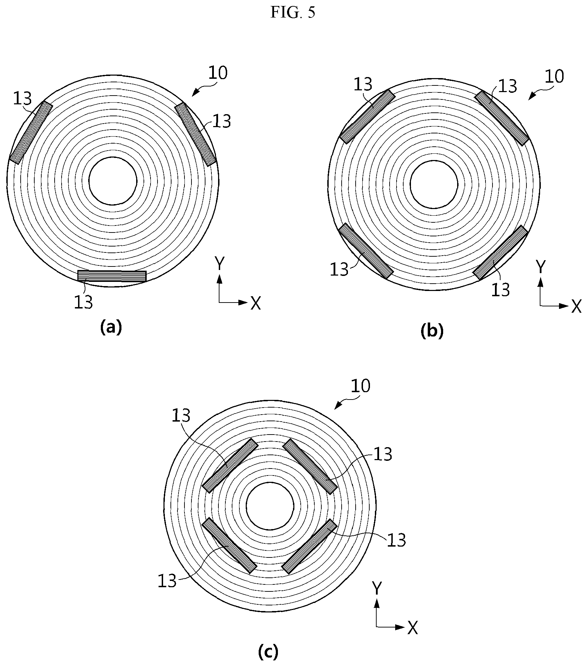

FIGS. 5 to 8 are plan views illustrating various examples of electrode assemblies according to an embodiment of the present disclosure.

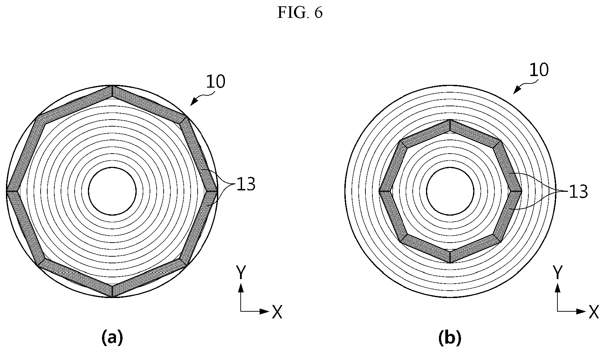

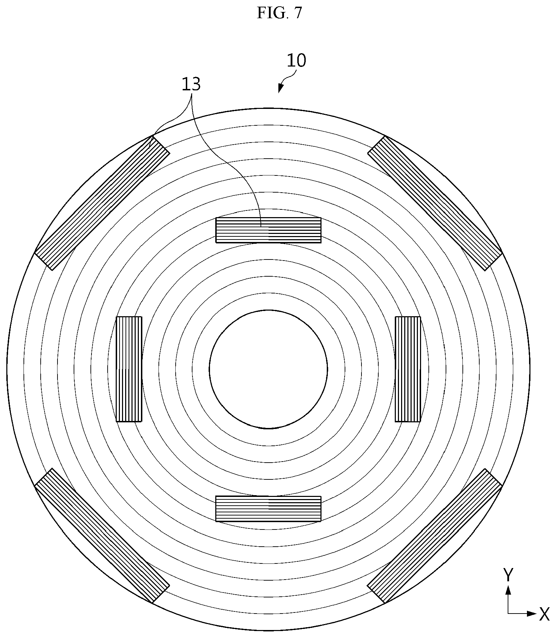

Referring to FIGS. 5 to 7, a plurality of weld tabs 13 may be provided on at least one side of the electrode assembly 10, and the plurality of weld tabs 13 may be arranged in the circumferential direction. The plurality of weld tabs 13 may be arranged at positions adjacent to the outer circumference of the electrode assembly 10 so as to be spaced apart from each other in the circumferential direction (FIGS. 5(a) and 5(b)), or the plurality of weld tabs 13 may be arranged at positions spaced apart from the outer circumference of the electrode assembly 10 so as to be spaced apart from each other in the circumferential direction (FIG. 5(c)). In addition, the plurality of weld tabs 13 may be arranged continuously in the circumferential direction at positions adjacent to the outer circumference of the electrode assembly 10 (FIG. 6(a)), or the plurality of weld tabs 13 may be arranged continuously in the circumferential direction at positions spaced apart from the outer circumference of the electrode assembly 10 (FIG. 6(b)). In addition, the plurality of weld tabs 13 may be arranged alternately in the circumferential direction at positions adjacent to and spaced apart from the outer circumference of the electrode assembly 10 (FIG. 7).

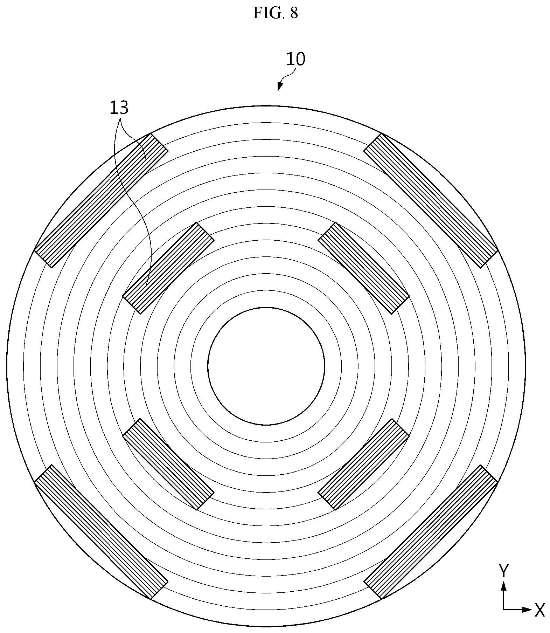

Referring to FIG. 8, a plurality of weld tabs 13 may be provided on at least one side of the electrode assembly 10, and the plurality of weld tabs 13 may be arranged in a radial direction.

Alternatively, a combination of any two or more of the configurations in FIGS. 5 to 8 is also possible.

As described above, since a plurality of weld tabs 13 are arranged in the circumferential direction and/or radial direction, the weld tabs 13 may be designed in various ways as needed.

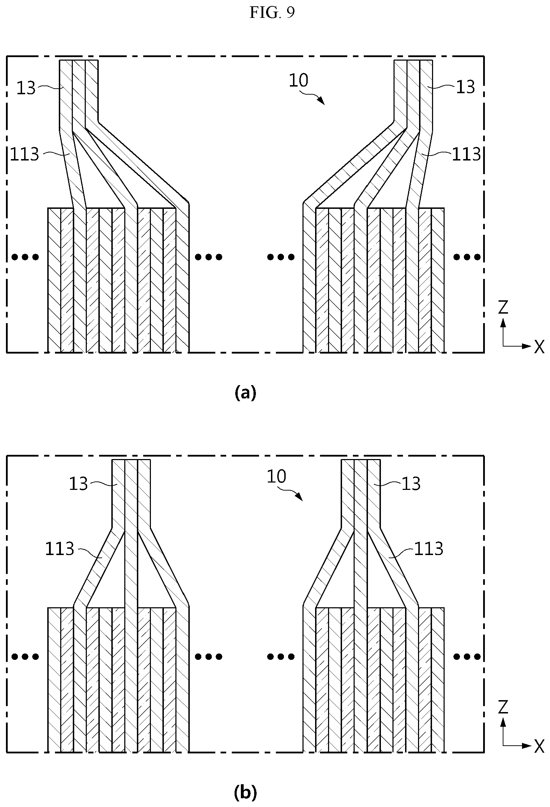

FIG. 9 is a side cross-sectional view illustrating examples of electrode assemblies according to an embodiment of the present disclosure.

In a case where the foil tabs 113 and weld tab 13 are configured as shown in FIG. 9(a), the weld tab 13 may be easily formed at a position adjacent to the outer circumference of the electrode assembly 10. In addition, in a case where the foil tabs 113 and weld tab 13 are configured as shown in FIG. 9(b), the weld tab 13 may be easily formed at a position spaced apart from the outer circumference of the electrode assembly 10.

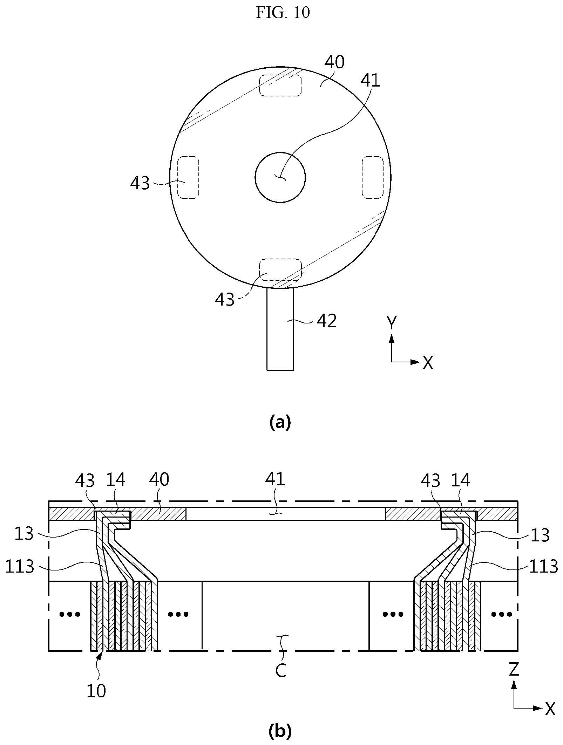

FIG. 10 is a diagram illustrating a current collector according to a modified example of an embodiment of the present disclosure.

Referring to FIG. 10, a current collector 40 according to a modified example of an embodiment of the present disclosure may include an inner groove 43. The inner groove 43 may be provided on the inner surface of the current collector 40. Here, the inner surface may indicate the surface facing the electrode assembly 10. The inner groove 43 may be formed to be recessed from the inner surface of the current collector 40.

A weld tab 13 may be secured into the inner groove 43. The weld tab 13 may be inserted and secured into the inner groove 43. The weld tab 13 and the current collector 40 may be secondarily welded in the inner groove 43.

A number of inner grooves 43 corresponding to the number of weld tabs 13 may be provided at positions corresponding to the weld tabs 13.

As described above, when the current collector 40 has the inner groove 43 above, the weld tab 13 may be welded to the current collector 40 more stably and firmly, and welding between the weld tab 13 and the current collector 40 may be facilitated. In addition, the volume of the battery cell 1 may be reduced, thereby improving energy density.

The bent portion 14 of the weld tab 13 may be secured to the inner groove 43. In this case, the weld tab 13 may be welded to the current collector 40 more stably and firmly, and welding between the weld tab 13 and the current collector 40 may be facilitated.

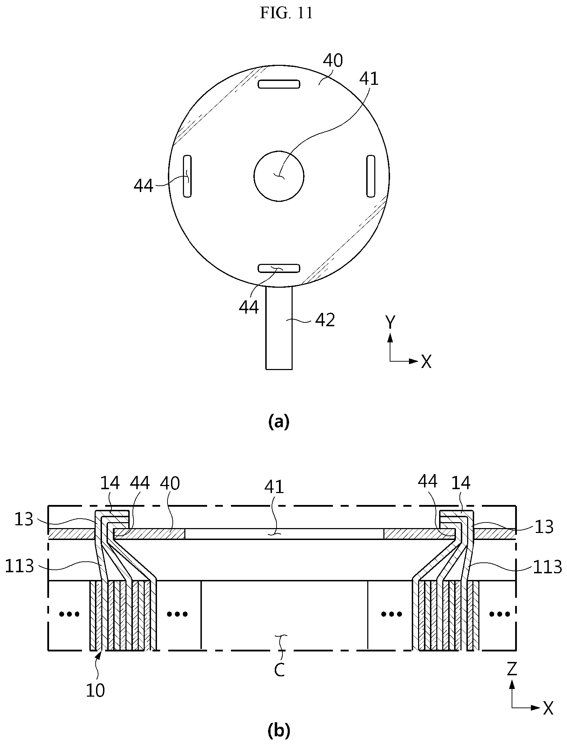

FIG. 11 is a diagram illustrating a current collector according to another embodiment of the present disclosure.

Referring to FIG. 11, a current collector 40 according to another embodiment of the present disclosure may have a through-hole 44. The through-hole 44 may be formed such that the weld tab 13 may pass through it.

A number of through-holes 44 corresponding to the number of weld tabs 13 may be provided at positions corresponding to the weld tabs 13.

As described above, when the current collector 40 has the through-hole 44, at least a portion of the weld tab 13 may pass through the through-hole 44 and then be secured, so that the weld tab 13 may be stably and firmly welded to the current collector 40, and welding of the weld tab 13 and the current collector 40 may be facilitated.

In the case where the weld tab 13 includes a bent portion 14, the bent portion 14 may be positioned outside the current collector 40. In this case, the current collector 40 may be temporarily fixed by the bent portion 14, and the weld tab 13 and the current collector 40 may be welded to each other more firmly and stably.

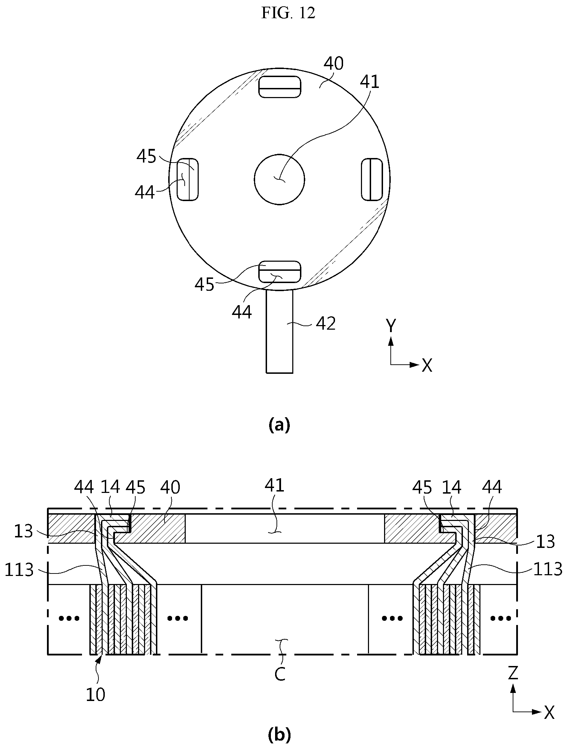

FIG. 12 is a diagram illustrating a current collector according to a modified example of another embodiment of the present disclosure.

Referring to FIG. 12, a current collector 40 according to a modified example of another embodiment of the present disclosure may include an outer groove 45. Specifically, the outer groove 45 may be formed on the outer surface of the current collector 40 such that the bent portion 14 of the weld tab 13 may be secured thereto.

The outer groove 45 may be provided for each through-hole 44.

A number of outer grooves 45 corresponding to the number of weld tabs 13 may be provided at positions corresponding to the weld tabs 13.

As described above, when the bent portion 14 is secured to the outer groove 45, the bent portion 14 may be more easily temporarily secured to the current collector 40, and the weld tab 13 and the current collector 40 may be welded to each other more firmly and stably. In addition, the volume of the battery cell 1 may be reduced, thereby improving energy density.

Referring back to FIGS. 1 and 2, the battery cell 1 according to the present disclosure may further include a cell housing 20, a cap 30, a terminal 50, an insulating gasket 60, and an insulator 70.

The cell housing 20 may accommodate the electrode assembly 10. The cell housing 20 may be provided, for example, in the shape of a hollow cylinder to accommodate the electrode assembly 10. A closed portion may be formed on one side (e.g., the +Z-direction side) of the cell housing 20. An opening may be formed on the other side (e.g., the -Z-direction side of the cell housing 20), and the cap 30 may be provided to cover the opening.

The first current collector 40a may be disposed on one inner side of the cell housing 20, and the second current collector 40b may be disposed on the other inner side of the cell housing 20. Alternatively, the first current collector 40a and the second current collector 40b may be disposed on the other side and one side of the cell housing 20, respectively.

The terminal 50 may be disposed on one side of the cell housing 20. At least a portion of the terminal 50 may be exposed to the outside by passing through one side of the cell housing 20. The terminal 50 may be electrically connected to the first electrode 11a and may have the first polarity. The terminal 50 may be provided in the form of a rivet.

The insulating gasket 60 may be positioned between the terminal 50 and the cell housing 20. The insulating gasket 60 may insulate the terminal 50 and the cell housing 20 from each other.

The insulator 70 may be positioned between the first current collector 40a and the cell housing 20. The insulator 70 may insulate the first current collector 40a and the cell housing 20 from each other.

Referring back to FIG. 4, the electrode 11 may include an insulating coating portion 115. The insulating coating portion 115 may be positioned at the boundary between the uncoated portion 112 and the coated portion 111. The insulating coating portion 115 may be provided, for example, on the first electrode 11a. The insulating coating portion 115 may prevent the coated portions 111 of the first electrode 11a and the second electrode 11b from contacting each other.

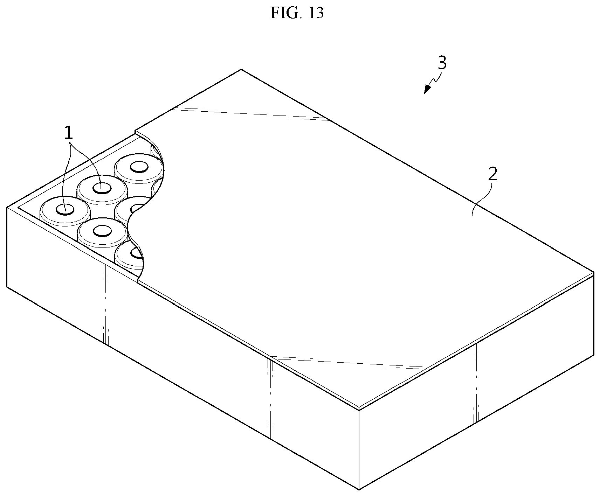

FIG. 13 is a diagram illustrating a battery pack according to an embodiment of the present disclosure.

Referring to FIG. 13, a battery pack 3 according to the present disclosure may include at least one battery cell 1 according to the present disclosure. The battery pack 3 may include a pack case 2 that accommodates at least one battery cell 1.

In the drawing, for convenience of illustration, components such as a busbar for electrical connection between the battery cells 1, a cooling unit, and an external terminal are omitted. The structure of the plurality of battery cells 1 for manufacturing the battery pack 3 has been described above.

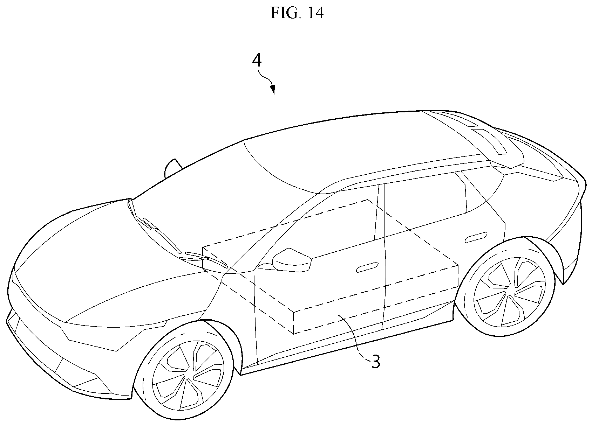

FIG. 14 is a drawing illustrating a vehicle according to an embodiment of the present disclosure.

Referring to FIG. 14, the battery pack 3 according to an embodiment of the present disclosure may be applied to a vehicle 4, such as an electric vehicle or a hybrid vehicle. That is, a vehicle 4 according to the present disclosure may include the battery pack 3 according to the present disclosure. The battery pack 3 may be installed in the chassis under the vehicle seat or in the trunk space. In addition to the battery pack 3, the vehicle 4 according to the present disclosure may further include various other components included in the vehicle 4. For example, the vehicle 4 according to an embodiment of the present disclosure may further include, in addition to the battery pack 3 according to the present disclosure, a chassis, a motor, a control device such as an ECU (electronic control unit), and the like.

In addition, it is obvious that the battery pack 3 according to the present disclosure may be applied to other devices, apparatuses, and equipment, such as energy storage systems that utilize secondary batteries, in addition to the vehicle 4.

Meanwhile, although terms indicating directions such as upward, downward, left, right, frontward, and backward directions are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

### [Description of Reference numerals]

1: Battery cell
2: Pack case
3: Battery pack
4: Vehicle
10: Electrode assembly
11: Electrode
11a: First electrode
11b: Second electrode
12: Separator
13: Weld tab
14: Bent portion
20: Cell housing
30: Cap
40: Current collector
40a: First current collector
40b: Second current collector
41: Hollow cavity
42: Tab
43: Inner groove
44: Through-hole
45: Outer groove
50: Terminal
60: Insulating gasket
70: Insulator
111: Coated portion
112: Uncoated portion
113: Foil tab
114: Notched portion
115: Insulating coating portion
C: Winding axis

## Claims

1. A battery cell comprising:
an electrode assembly configured by winding electrodes with a separator interposed between them around a winding axis;
at least one weld tab formed by first welding at least some of a plurality of foil tabs formed in an uncoated portion of the electrode while being stacked in a direction different from the winding axis; and
a current collector electrically connected to the electrode assembly and secondarily welded to the weld tab.

2. The battery cell of claim 1,
wherein the weld tab
is formed by first welding at least some of the plurality of foil tabs while being stacked in a direction perpendicular to the winding axis.

3. The battery cell of claim 1,
wherein the foil tab
has a height that decreases in a direction away from the winding axis in at least some regions of the uncoated portion.

4. The battery cell of claim 1,
wherein a plurality of weld tabs are provided, and
wherein the plurality of weld tabs are arranged in a circumferential direction.

5. The battery cell of claim 1,
wherein a plurality of weld tabs are provided, and
wherein the plurality of weld tabs are arranged in a radial direction.

6. The battery cell of claim 1,
wherein the current collector has
an inner groove formed on an inner surface of the current collector such that the weld tab is secured thereinto.

7. The battery cell of claim 6,
wherein the weld tab has a bent portion having a bent shape, and
wherein the bent portion is secured into the inner groove.

8. The battery cell of claim 1,
wherein the current collector has
a through-hole formed to allow the weld tab to pass therethrough.

9. The battery cell of claim 8,
wherein the weld tab has a bent portion having a bent shape, and
wherein the bent portion is disposed outside the current collector.

10. The battery cell of claim 9,
wherein the current collector has
an outer groove formed on an outer surface of the current collector such that the bent portion is secured thereinto.

11. A battery pack comprising at least one battery cell according to any one of claims 1 to 10.

12. A vehicle comprising at least one battery pack according to claim 11.
